# EUROPEAN PATENT APPLICATION

(11) **EP 4 831 259 A1**
(43) Date of publication of application: **28.10.2026**
(21) Application number: 24907538.3
(22) Date of filing: 20.12.2024
(51) Int. Cl.: C09J 7/40, B32B 27/00, C08L 83/04, C08L 83/05, C08L 83/07, C09J 7/38

(54) **LAMINATE**

(30) Priority: 21.12.2023 JP 2023216170
(71) Applicant: Dow Toray Co., Ltd., Tokyo 140-8617 (JP)
(72) Inventor: TANAKA, Hidefumi, Ichihara-shi Chiba 299-0108 (JP); HINO, Takakazu, Ichihara-shi Chiba 299-0108 (JP); ITO, Tsuyoshi, Ichihara-shi Chiba 299-0108 (JP)
(74) Representative: Elkington and Fife LLP
(86) International application number: PCT/JP2024/045133
(87) International publication number: WO 2025/135154

(57) **Abstract**

A laminate body having a structure in which an adhesive layer containing an organopolysiloxane is provided opposite to at least one release layer, the release layer having a cured product made by curing a curable organopolysiloxane composition, the composition comprising:
(A) 100 parts by mass of a chain-like organopolysiloxane having an alkenyl group with 2 to 12 carbon atoms, having a viscosity of 1,000,000 mPa·s or more at 25°C, or having plasticity at 25°C;
(B) 5 to 80 parts by mass of a linear organopolysiloxane that does not contain an alkenyl group and has a viscosity at 25°C of 500,000 mPa·s or more, or has plasticity at 25°C;
(C) 0 to 20 parts by mass of a linear organopolysiloxane without an alkenyl group, having a viscosity at 25°C of less than 500,000 mPa·s;
(D) an organohydrogenpolysiloxane having two or more silicon atom-bonded hydrogen atoms (Si-H) in each molecule; and
(E) a hydrosilylation reaction catalyst.

## Description

### TECHNICAL FIELD

The present invention relates to a laminate body and article. More specifically, the laminate body has a structure in which an adhesive layer containing an organopolysiloxane is provided opposite at least one release layer.

### BACKGROUND ART

Silicone adhesives (pressure-sensitive adhesives) have been widely used as adhesives for industrial protective tapes, masking tapes, and the like, or for various medical functional tapes and the like, due to the excellent heat resistance, cold resistance, weather resistance, chemical resistance, electrical insulation, and the like. Moreover, in recent years, silicone adhesives have been used for so-called assembly applications represented by optical components for liquid crystal displays (display devices, functional films, lenses, and the like).
Examples of such silicone adhesives include those described in Patent Documents 1 to 3. Furthermore, Patent Document 4 discloses a curable silicone composition containing a fluorine-containing compound.

### RELATED ART DOCUMENTS

### PATENT DOCUMENTS

Patent Document 1: JP S61-162561 A
Patent Document 2: JP H1-230669 A
Patent Document 3: JP H06-93183 A
Patent Document 4: WO 2022/138349 A1

### SUMMARY OF THE INVENTION

### PROBLEM TO BE SOLVED BY THE INVENTION

Under these circumstances, there is need for a novel laminate body and the like having a cured product obtained by curing a curable organopolysiloxane composition.

### MEANS FOR SOLVING THE PROBLEM

The present invention provides the following laminate body and the like.
[1] A laminate body having a structure in which an adhesive layer containing an organopolysiloxane is provided opposite to at least one release layer, the release layer having a cured product made by curing a curable organopolysiloxane composition, the composition comprising:
   (A) 100 parts by mass of a chain-like organopolysiloxane having an alkenyl group with 2 to 12 carbon atoms, having a viscosity of 1,000,000 mPa·s or more at 25°C, or having plasticity at 25°C;
   (B) 5 to 80 parts by mass of a linear organopolysiloxane that does not contain an alkenyl group and has a viscosity at 25°C of 500000 mPa·s or more, or has plasticity at 25°C;
   (C) 0 to 20 parts by mass of a linear organopolysiloxane without an alkenyl group, having a viscosity at 25°C of less than 500000 mPa·s;
   (D) an organohydrogenpolysiloxane having two or more silicon atom-bonded hydrogen atoms (Si-H) in each molecule; and
   (E) a hydrosilylation reaction catalyst.
[2] The laminate body according to [1], wherein component (B) contains a chain-like organopolysiloxane in which both terminals of the molecular chain are blocked with hydroxyl groups.
[3] The laminate body according to [1] or [2], wherein component (B) contains a chain-like organopolysiloxane in which both terminals of the molecular chain are blocked with trialkylsilyl groups.
[4] The laminate body according to any one of [1] to [3], wherein component (C) contains a chain-like organopolysiloxane in which both terminals of the molecular chain are blocked with trialkylsilyl groups or hydroxyl groups.
[5] The laminate body according to any one of [1] to [4], wherein component (C) contains a chain-like organopolysiloxane having in a side chain at least one group selected from the group consisting of alkyl groups and aryl groups having 1 to 12 carbon atoms.
[6] The laminate body according to any one of [1] to [5], wherein component (C) contains a chain-like organopolysiloxane having in a side chain at least one group selected from the group consisting of methyl groups and phenyl groups.
[7] The laminate body according to any one of [1] to [6], wherein component (D) contains an organohydrogenpolysiloxane having a viscosity at 25°C of 1 to 1000 mPa·s, and both terminals of the molecular chain are blocked with trimethylsilyl groups.
[8] The laminate body according to any one of [1] to [7], wherein the amount of component (D) is such that the molar ratio of silicon atom-bonded hydrogen atoms in component (D) to alkenyl groups in component (A) is 0.5 to 10.0.
[9] The laminate body according to any one of [1] to [8], wherein
   Component (A) contains a chain-like organopolysiloxane having in a side chain an alkenyl group with 2 to 12 carbon atoms;
   Component (B) contains a chain-like organopolysiloxane in which both terminals of the molecular chain are blocked with hydroxyl groups, or both terminals of the molecular chain are blocked with trimethylsilyl groups; and
   Component (C) contains a chain-like organopolysiloxane in which both terminals of the molecular chain are blocked with trimethylsilyl groups or hydroxyl groups.
[10] The laminate body according to any one of [1] to [9], not containing a fluorine-containing compound.
[11] The laminate body according to any one of [1] to [10], having a sheet-like, roll-like, or film-like shape.
[12] An article, comprising: a laminate body according to any one of [1] to [11].

### EFFECT OF THE INVENTION

One embodiment of the present invention provides a laminate body having a release layer (for example, a release film; same hereinafter) that can be peeled off with a low peeling force and has reduced peeling resistance to silicone adhesives. One embodiment of the present invention provides a laminate body having a release layer that maintains favorable residual adhesive strength even after peeling.

### DESCRIPTION OF THE PREFERRED EMBODIMENTS

For the numerical ranges described in the present specification, the upper and lower limits can be combined as desired. For example, when the numerical range is described as "preferably 30 to 100, more preferably 40 to 80", the ranges "30 to 80" and "40 to 100" are also included in the numerical range described in the present specification. Furthermore, for example, when the numerical range is described as "preferably 30 or more, more preferably 40 or more, and preferably 100 or less, more preferably 80 or less", the ranges "30 to 80" and "40 to 100" are also included in the numerical range described in the present specification.

In addition, as a numerical range described in the present specification, for example, the statement "60 to 100" means that the range is "60 or more and 100 or less".

### 1. Laminate body

In one aspect, the present invention provides a laminate body (hereinafter also referred to as "the laminate body of the present invention"). The laminate body of the present invention has a structure in which an adhesive layer containing an organopolysiloxane is provided opposite to at least one release layer, the release layer having a cured product made by curing a curable organopolysiloxane composition, the composition comprising:
(A) 100 parts by mass of a chain-like organopolysiloxane having an alkenyl group with 2 to 12 carbon atoms, having a viscosity of 1,000,000 mPa·s or more at 25°C, or having plasticity at 25°C;
(B) 5 to 80 parts by mass of a linear organopolysiloxane that does not contain an alkenyl group and has a viscosity at 25°C of 500000 mPa·s or more, or has plasticity at 25°C;
optionally, (C) 0 to 20 parts by mass of a linear organopolysiloxane without an alkenyl group, having a viscosity at 25°C of less than 500000 mPa·s;
(D) an organohydrogenpolysiloxane having two or more silicon atom-bonded hydrogen atoms (Si-H) in each molecule; and
(E) a hydrosilylation reaction catalyst
(hereinafter also referred to as the "composition of the present invention").

The laminate body according to one embodiment of the present invention does not contain a fluorine-containing compound. One embodiment of the present invention provides a laminate body having a release layer with reduced peeling resistance, without using a fluorine-containing compound.

The following describes in detail each component of the composition of the present invention that constitutes the release layer of the laminate body of the present invention.

### 1.1 Component (A)

Component (A) is a high molecular weight, chain-like organopolysiloxane that serves as the base polymer. The composition of the present invention contains as component (A) a curable organopolysiloxane composition containing a chain-like organopolysiloxane having alkenyl groups with 2 to 12 carbon atoms, having a viscosity of 1,000,000 mPa·s or more at 25°C, or having plasticity at 25°C.

In one embodiment of the present invention, component (A) may be a mixture of chain-like organopolysiloxanes having the aforementioned properties. When a mixture of chain-like organopolysiloxanes is used as component (A), the mixture preferably has the aforementioned properties.

In one embodiment of the present invention, component (A) may continuously extend from a region exhibiting a high viscosity liquid state (for example, a viscosity of 1,000,000 mPa·s or more at 25°C) to a region exhibiting a gummy state with plasticity at 25°C, due to an increase in the degree of polymerization or the like.

Generally, as the degree of polymerization of organopolysiloxanes increases, the viscosity becomes difficult to measure if the viscosity at 25°C exceeds 15,000,000 mPa·s, and the material transitions from a region exhibiting high viscosity (liquid) to a region where the physical properties are determined by plasticity (gum-like).

In one embodiment of the present invention, component (A) includes an organopolysiloxane or a mixture thereof having a degree of polymerization such that the viscosity can be measured at 25°C, and exhibits a liquid state with a viscosity of 1,000,000 mPa·s or more.

Furthermore, in one embodiment of the present invention, component (A) includes an organopolysiloxane or a mixture thereof having a degree of polymerization such that the viscosity at 25°C is difficult to measure and the physical properties should be determined by the plasticity, resulting in a gum-like appearance.

Furthermore, in one embodiment of the present invention, component (A) includes an organopolysiloxane having the aforementioned degree of polymerization that exhibits a liquid state, and a mixture of organopolysiloxanes having the aforementioned degree of polymerization that exhibits a gum-like state.

The viscosity at 25°C of the chain-like organopolysiloxane in component (A) should be 1,000,000 mPa·s or higher, preferably 3,000,000 mPa·s or higher, more preferably 6,000,000 mPa·s or higher, even more preferably 9,000,000 mPa·s or higher, and particularly preferably 12,000,000 mPa·s or higher.

While there is no particular upper limit, the viscosity at 25°C is within the range in which viscosity measurement is possible, specifically, 15,000,000 mPa·s or less.

By using a chain-like organopolysiloxane having a viscosity at 25°C that is within the aforementioned range, the peeling resistance to the adhesive substance in the release layer formed by curing the composition according to one embodiment of the present invention can be reduced.

Note that in the present specification, viscosity refers to a value measured at 25°C using a Brookfield viscometer.

In component (A), the plasticity at 25°C of the chain-like organopolysiloxane should be 0.50 or higher, preferably 1.00 or higher, and particularly preferably 1.20 or higher.

The upper limit of plasticity is not particularly limited, but for example, the value may be 2.00 or less, 1.80 or less, or 1.70 or less.

By using a chain-like organopolysiloxane having a plasticity at 25°C that is within the aforementioned range, the peeling resistance of the release layer formed by curing the composition according to one embodiment of the present invention can be reduced.

Note that in the present specification, plasticity is the value measured by a plasticity meter in accordance with the method specified in JIS K 6249, and specifically, the value (unit: mm) is obtained when a 4.2 g spherical sample is subjected to a load of 1 kgf for 3 minutes at 25°C.

In one embodiment of the present invention, specific examples of the alkenyl group with 2 to 12 carbon atoms include vinyl groups, propenyl groups (including allyl groups), butenyl groups, pentenyl groups, hexenyl groups, heptenyl groups, octenyl groups, nonenyl groups, decenyl groups, undecenyl groups, and dodecenyl groups. Note that these groups also include structural isomers.

In one embodiment of the present invention, the alkenyl group is preferably an alkenyl group with 2 to 10 carbon atoms, more preferably an alkenyl group with 2 to 8 carbon atoms, still more preferably a group selected from the group consisting of vinyl groups, allyl groups, and hexenyl groups, and particularly preferably a vinyl group or a hexenyl group.

Furthermore, the bonding position of the alkenyl group may be, for example, at the molecular chain terminal and/or molecular chain side chain, but component (A) preferably has an alkenyl group bonded to a silicon atom at a site other than the molecular chain terminal.

For example, good curability, peelability, and residual adhesive strength can be achieved in the release layer formed by curing the composition according to one embodiment of the present invention by providing an alkenyl group in a side chain.

In one embodiment of the present invention, the amount of the vinyl (CH₂=CH-) moiety in the alkenyl group in component (A) (hereinafter referred to as "vinyl group content") is preferably in a range of 0.005 to 5.0 mass%, more preferably in a range of 0.01 to 3.0 mass%, and even more preferably in a range of 0.10 to 1.5 mass%.

By setting the vinyl group content in component (A) within the aforementioned range, a curable organopolysiloxane composition can be provided that has favorable curability and residual adhesive strength, and can form a release layer with reduced peeling resistance.

In component (A), the silicon atom-bonded group other than the alkenyl group may be the monovalent hydrocarbon group with 1 to 12 carbon atoms and no aliphatic unsaturated bonds.

Specific examples of monovalent hydrocarbon groups with 1 to 12 carbon atoms and no aliphatic unsaturated bonds include alkyl groups, aryl groups, and aralkyl groups.

Specific examples of the alkyl group include methyl groups, ethyl groups, n-propyl groups, isopropyl groups, and other propyl groups, n-butyl groups, isobutyl groups, s-butyl groups, t-butyl groups, and other butyl groups, pentyl groups, hexyl groups, heptyl groups, octyl groups, nonyl groups, decyl groups, undecyl groups, and dodecyl groups. Note that these groups also include structural isomers.

Specific examples of the aryl group include phenyl groups, tolyl groups, xylyl groups, and naphthyl groups.

Specific examples of the aralkyl group include benzyl groups, phenethyl groups, 3-phenylpropyl groups, and 4-phenylbutyl groups.

Of these, the monovalent hydrocarbon group is preferably an alkyl group with 1 to 6 carbon atoms, more preferably an alkyl group with 1 to 4 carbon atoms, and even more preferably a methyl group.

In one embodiment of the present invention, the chain-like organopolysiloxane of component (A) does not contain a fluorine atom.

The molecular structure of component (A) may be linear, partially branched linear, branched, cyclic, network, dendritic, or the like.

In one embodiment of the present invention, component (A) may be a mixture of two or more molecules having these molecular structures. In another embodiment of the present invention, component (A) may be at least one group selected from the group consisting of linear organopolysiloxanes, branched organopolysiloxanes, and mixtures thereof. In another embodiment of the present invention, component (A) may be a linear organopolysiloxane.

Specific examples of linear organopolysiloxanes include dimethylsiloxane-methylvinylsiloxane copolymers blocked at both molecular chain terminals with silanol groups, dimethylsiloxane-methylvinylsiloxane copolymers blocked at both molecular chain terminals with trimethylsilyl groups, dimethylsiloxane-methylvinylsiloxane-methylphenylsiloxane copolymers blocked at both molecular chain terminals with trimethylsilyl groups, dimethylpolysiloxanes blocked at both molecular chain terminals with dimethylvinylsiloxy groups, methylphenylpolysiloxanes blocked at both molecular chain terminals with dimethylvinylsiloxy groups, dimethylsiloxane-methylvinylsiloxane copolymers blocked at both molecular chain terminals with dimethylvinylsiloxy groups, dimethylpolysiloxane-methylphenylpolysiloxane copolymers blocked at both molecular chain terminals with dimethylvinylsiloxy groups, dimethylsiloxane-methylvinylsiloxane copolymers blocked at both molecular chain terminals with dimethylphenylsiloxy groups, and dimethylpolysiloxanes blocked at both molecular chain terminals with methylvinylphenylsiloxy groups.

Furthermore, other examples of linear organopolysiloxanes include dimethylsiloxane-methylhexenylsiloxane copolymers blocked at both molecular chain terminals with silanol groups, dimethylsiloxane-methylhexenylsiloxane copolymers blocked at both molecular chain terminals with trimethylsilyl groups, dimethylsiloxane-methylhexenylsiloxane-methylphenylsiloxane copolymers blocked at both molecular chain terminals with trimethylsilyl groups, dimethylpolysiloxanes blocked at both molecular chain terminals with dimethylhexenylsiloxy groups, methylphenylpolysiloxanes blocked at both molecular chain terminals with dimethylhexenylsiloxy groups, dimethylsiloxane-methylhexenylsiloxane copolymers blocked at both molecular chain terminals with dimethylhexenylsiloxy groups, dimethylpolysiloxane-methylphenylpolysiloxane copolymers blocked at both molecular chain terminals with dimethylhexenylsiloxy groups, dimethylsiloxane-methylhexenylsiloxane copolymers blocked at both molecular chain terminals with dimethylphenylsiloxy groups, and dimethylpolysiloxanes blocked at both molecular chain terminals with methylhexenylphenylsiloxy groups.

Examples of branched organopolysiloxanes include MQ resins, MDQ resins, MTQ resins, MDTQ resins, TD resins, TQ resins, and TDQ resins, which contain any combination of triorganosiloxy units (M units) (organo groups are groups selected from methyl groups only, or methyl groups, vinyl groups, and phenyl groups), diorganosiloxy units (D units) (organo groups are groups selected from methyl groups only, or methyl groups, vinyl groups, and phenyl groups), monoorganosiloxy units (T units) (organo groups are methyl groups, vinyl groups, or phenyl groups), and siloxy units (Q units).

In one embodiment of the present invention, the amount of component (A) is not particularly limited. In the composition of the present invention, both good peeling properties and residual adhesive strength can be maintained in the release layer formed from the composition of one embodiment of the present invention by adjusting the amount of each component described later, based on 100 parts by mass of component (A).

### 1.2 Component (B)

Component (B) is a chain-like organopolysiloxane. The peeling resistance of the release layer formed by curing the composition according to one embodiment of the present invention can be reduced by including component (B).

The composition of the present invention contains as component (B) a curable organopolysiloxane composition containing a chain-like organopolysiloxane not having an alkenyl group, having a viscosity of 500,000 mPa·s or more at 25°C, or having plasticity at 25°C.

In one embodiment of the present invention, component (B) may be a mixture of chain-like organopolysiloxanes having the above properties. When a mixture of chain-like organopolysiloxanes is used as component (B), the mixture preferably has the aforementioned properties.

The viscosity at 25°C of the chain-like organopolysiloxane in component (B) should be 500,000 mPa·s or higher, preferably 1,000,000 mPa·s or higher, more preferably 3,000,000 mPa·s or higher, even more preferably 6,000,000 mPa·s or higher, and particularly preferably 12,000,000 mPa·s or higher.

While there is no particular upper limit, the viscosity at 25°C is within the range in which viscosity measurement is possible, specifically, 15,000,000 mPa·s or less.

By using a chain-like organopolysiloxane having a viscosity at 25°C that is within the aforementioned range together with Component (A), the peeling resistance to the adhesive substance in the release layer formed by curing the composition according to one embodiment of the present invention can be reduced.

In component (B), the plasticity at 25°C of the chain-like organopolysiloxane should be 0.50 or higher, preferably 1.00 or higher, and particularly preferably 1.20 or higher.

The upper limit of plasticity is not particularly limited, but for example, the value may be 2.00 or less, 1.80 or less, or 1.70 or less.

By using a chain-like organopolysiloxane having plasticity at 25°C that is within the aforementioned range together with Component (A), the peeling resistance of the release layer formed by curing the composition according to one embodiment of the present invention can be reduced.

In the composition of the present invention, component (B) does not have an alkenyl group in the molecule. In one embodiment of the present invention, component (B) does not have an alkenyl group at the molecular chain terminal or at a molecular chain side chain.

Component (B) does not have an alkenyl group in the molecule, so the peeling resistance of the release layer formed by curing a composition according to one embodiment of the present invention to the adhesive substance can be reduced.

In one embodiment of the present invention, the chain-like organopolysiloxane of component (B) does not contain a fluorine atom.

Furthermore, the molecular structure of component (B) may be linear, partially branched linear, branched, cyclic, network, dendritic, or the like.

In one embodiment of the present invention, component (B) may be a mixture of two or more molecules having these molecular structures. In another embodiment of the present invention, component (B) may be at least one group selected from the group consisting of linear organopolysiloxanes, branched organopolysiloxanes, and mixtures thereof. In another embodiment of the present invention, component (B) may be a linear organopolysiloxane.

Component (B) of one embodiment of the present invention contains a chain-like organopolysiloxane in which both terminals of the molecular chain are blocked with hydroxyl groups.

Component (B) of one embodiment of the present invention contains a chain-like organopolysiloxane in which both terminals of the molecular chain are blocked with trialkylsilyl groups. Alkyl groups constituting the aforementioned trialkylsilyl group are as described below.

Component (B) of one embodiment of the present invention contains a mixture of a chain-like organopolysiloxane in which both terminals of the molecular chain are blocked with hydroxyl groups, and a chain-like organopolysiloxane in which both terminals of the molecular chain are blocked with trialkylsilyl groups.

The alkyl group constituting the trialkylsilyl group may be an alkyl group having 1 to 12 carbon atoms, and specific examples include methyl groups, ethyl groups, n-propyl groups, isopropyl groups, and other propyl groups, n-butyl groups, isobutyl groups, s-butyl groups, t-butyl groups, and other butyl groups, pentyl groups, hexyl groups, heptyl groups, octyl groups, nonyl groups, decyl groups, undecyl groups, and dodecyl groups. Note that these groups also include structural isomers. Among these, alkyl groups having 1 to 6 carbon atoms are preferred, alkyl groups having 1 to 4 carbon atoms are more preferred, and methyl groups are even more preferred.

Linear organopolysiloxanes specifically include, for example, dimethylpolysiloxane blocked with silanol groups at both terminals of the molecular chain, methylphenylpolysiloxane blocked with silanol groups at both terminals of the molecular chain, dimethylpolysiloxane/methylphenylpolysiloxane copolymer blocked with silanol groups at both terminals of the molecular chain, dimethylsiloxane blocked with trimethylsilyl groups at both terminals of the molecular chain, dimethylpolysiloxane blocked with trimethylsilyl groups at both terminals of the molecular chain, methylphenylpolysiloxane blocked with trimethylsilyl groups at both terminals of the molecular chain, and dimethylpolysiloxane/methylphenylpolysiloxane copolymer blocked with trimethylsilyl groups at both terminals of the molecular chain.

Examples of branched organopolysiloxanes include MQ resins, MDQ resins, MTQ resins, MDTQ resins, TD resins, TQ resins, and TDQ resins, which contain any combination of triorganosiloxy units (M units) (organo groups are groups selected from methyl groups only, or methyl groups, vinyl groups, and phenyl groups), diorganosiloxy units (D units) (organo groups are groups selected from methyl groups only, or methyl groups and phenyl groups), monoorganosiloxy units (T units) (organo groups are methyl groups, vinyl groups, or phenyl groups), and siloxy units (Q units).

In the composition of the present invention, the amount of component (B) is 5 to 80 parts by mass, based on 100 parts by mass of component (A). In one embodiment of the present invention, the amount of component (B) is more preferably in a range of 7 to 70 parts by mass, even more preferably in a range of 8 to 60 parts by mass, and particularly preferably in a range of 9 to 55 parts by mass, based on 100 parts by mass of component (A).

Both favorable peeling properties and residual adhesive strength can be maintained in the release layer formed by curing the composition according to one embodiment of the present invention by adjusting the amount of component (B) to the aforementioned range.

### 1.3 Component (C)

Component (C) is a component that can control the peeling properties of the release layer formed from a composition according to one embodiment of the present invention, and is a component that may be optionally included in the composition according to one embodiment of the present invention. The inclusion of component (C) stabilizes the peeling resistance.

The composition of one embodiment of the present invention contains, as component (C), a chain-like organopolysiloxane without alkenyl groups, having a viscosity at 25°C of less than 500,000 mPa·s.

In one embodiment of the present invention, component (C) may be a mixture of chain-like organopolysiloxanes having the above properties. When a mixture of chain-like organopolysiloxanes is used as component (C), the mixture preferably has the aforementioned properties.

The viscosity at 25°C of the chain-like organopolysiloxane in component (C) should be less than 500,000 mPa·s, but preferably is 250,000 mPa·s or less, more preferably 100,000 mPa·s or less, and even more preferably 50000 mPa·s or less.

The lower limit of viscosity is not particularly limited, but for example, the viscosity may be 10 mPa·s or more, 100 mPa·s or more, 300 mPa·s or more, or 500 mPa·s or more.

By using a chain-like organopolysiloxane with a viscosity at 25°C that is within the aforementioned range, the peeling behavior of the release layer formed from the composition according to one embodiment of the present invention can be stabilized.

In the composition of the present invention, component (C) does not have an alkenyl group in the molecule. In one embodiment of the present invention, component (C) does not have an alkenyl group at the molecular chain terminal or at a molecular chain side chain.

The absence of alkenyl groups in the molecule of component (C) stabilizes the peeling resistance from adhesive substances.

In one embodiment of the present invention, the chain-like organopolysiloxane of component (C) does not contain a fluorine atom.

Furthermore, the molecular structure of component (C) may be linear, partially branched linear, branched, cyclic, network, dendritic, or the like.

In one embodiment of the present invention, component (C) may be a mixture of two or more molecules having these molecular structures. In another embodiment of the present invention, component (C) may be at least one group selected from the group consisting of linear organopolysiloxanes, branched organopolysiloxanes, and mixtures thereof. In another embodiment of the present invention, component (C) may be a linear organopolysiloxane.

Component (C) of one embodiment of the present invention contains a chain-like organopolysiloxane in which both terminals of the molecular chain are blocked with hydroxyl groups.

Component (C) of one embodiment of the present invention contains a chain-like organopolysiloxane in which both terminals of the molecular chain are blocked with trialkylsilyl groups.

Component (C) of one embodiment of the present invention contains a mixture of a chain-like organopolysiloxane in which both terminals of the molecular chain are blocked with hydroxyl groups, and a chain-like organopolysiloxane in which both terminals of the molecular chain are blocked with trialkylsilyl groups.

The alkyl group of the trialkylsilyl group may be the same as those listed in "1.2 Component (B)" above.

Component (C) of one embodiment of the present invention contains a chain-like organopolysiloxane having in a side chain at least one group selected from the group consisting of alkyl groups and aryl groups having 1 to 12 carbon atoms.

Component (C) of one embodiment of the present invention contains a chain-like organopolysiloxane having both terminals of the molecular chain blocked with a hydroxyl group or a trialkylsilyl group, and having at least one moiety selected from the group consisting of alkyl groups and aryl groups having 1 to 12 carbon atoms as a side chain. The side chain is preferably an alkyl group or phenyl group having 1 to 6 carbon atoms, and more preferably a methyl group or a phenyl group.

Linear organopolysiloxanes specifically include, for example, dimethylpolysiloxane blocked with silanol groups at both terminals of the molecular chain, methylphenylpolysiloxane blocked with silanol groups at both terminals of the molecular chain, dimethylpolysiloxane/methylphenylpolysiloxane copolymer blocked with silanol groups at both terminals of the molecular chain, dimethylsiloxane blocked with trimethylsilyl groups at both terminals of the molecular chain, dimethylpolysiloxane blocked with trimethylsilyl groups at both terminals of the molecular chain, methylphenylpolysiloxane blocked with trimethylsilyl groups at both terminals of the molecular chain, and dimethylpolysiloxane/methylphenylpolysiloxane copolymer blocked with trimethylsilyl groups at both terminals of the molecular chain.

Examples of branched organopolysiloxanes include MQ resins, MDQ resins, MTQ resins, MDTQ resins, TD resins, TQ resins, and TDQ resins, which contain any combination of triorganosiloxy units (M units) (organo groups are groups selected from methyl groups only, or methyl groups, vinyl groups, and phenyl groups), diorganosiloxy units (D units) (organo groups are groups selected from methyl groups only, or methyl groups and phenyl groups), monoorganosiloxy units (T units) (organo groups are methyl groups, vinyl groups, or phenyl groups), and siloxy units (Q units).

In the composition of the present invention, the amount of component (C) is 0 to 20 parts by mass, based on 100 parts by mass of component (A). In one embodiment of the present invention, the amount of component (C) is preferably in a range of 0.1 to 20 parts by mass, more preferably in a range of 0.5 to 10 parts by mass, even more preferably in a range of 1.0 to 5.0 parts by mass, and particularly preferably in a range of 1.2 to 2.0 parts by mass, based on 100 parts by mass of component (A).

If component (C) is included, favorable adhesive strength can be maintained without inhibiting the curing reaction of the composition by adjusting the amount of component (C) to be within the aforementioned range, while simultaneously maintaining good peeling properties and residual adhesive strength of the release layer formed by curing the composition according to one embodiment of the present invention.

The composition according to one embodiment of the present invention contains a curable organopolysiloxane composition having the following combination of components (A) to (C).

The curable organopolysiloxane composition, wherein
Component (A) contains a chain-like organopolysiloxane having in a side chain an alkenyl group with 2 to 12 carbon atoms;
Component (B) contains a chain-like organopolysiloxane in which both terminals of the molecular chain are blocked with hydroxyl groups, or both terminals of the molecular chain are blocked with trimethylsilyl groups; and
Component (C) contains a chain-like organopolysiloxane in which both terminals of the molecular chain are blocked with trimethylsilyl groups or hydroxyl groups.

### 1.4 Component (D)

Component (D) is a component that functions as a crosslinking agent. The composition of the present invention contains an organohydrogenpolysiloxane having two or more silicon atom-bonded hydrogen atoms (Si-H) in one molecule. In one embodiment of the present invention, component (D) may have three or more silicon atom-bonded hydrogen atoms (Si-H) in one molecule. The bonding position of the hydrogen atom in the molecule is not particularly limited. Note that the number of silicon atom-bonded hydrogen atoms in the molecule is the average value of all molecules.

In component (D), the silicon atom-bonded groups other than hydrogen atoms may be monovalent hydrocarbon groups with 1 to 12 carbon atoms and no aliphatic unsaturated bonds. The monovalent hydrocarbon group is exemplified by the same group listed in section "1.1 Component (A)" above. Furthermore, the monovalent hydrocarbon group is preferably an alkyl group with 1 to 6 carbon atoms, more preferably an alkyl group with 1 to 4 carbon atoms, and even more preferably a methyl group.

Furthermore, the molecular structure of component (D) may be linear, partially branched linear, branched, cyclic, network, dendritic, or the like.

In one embodiment of the present invention, component (D) may be a mixture of two or more having these molecular structures, and in particular, may be a mixture of two or more organohydrogenpolysiloxanes with different viscosity or molecular structure. In another embodiment of the present invention, component (D) may be one or more type selected from the group consisting of linear organohydrogenpolysiloxanes, branched organohydrogenpolysiloxanes, and mixtures thereof. In another embodiment of the present invention, component (D) may be a linear organohydrogenpolysiloxane.

In one embodiment of the present invention, the viscosity at 25°C of component (D) is, for example, in a range that is preferably 1 to 1000 mPa·s, more preferably 2 to 300 mPa·s, and even more preferably 5 to 100 mPa·s.

In one embodiment of the present invention, component (D) may be a mixture of two or more different organohydrogenpolysiloxanes.

Furthermore, when a mixture of organohydrogenpolysiloxanes is used as component (D), for example, two components (d-1) and (d-2) having different viscosity and/or structure may each have a viscosity at 25°C within the following numerical ranges.

In other words, in one embodiment of the present invention, the viscosity at 25°C of component (d-1) is preferably 5 to 35 mPa·s, more preferably 10 to 30 mPa·s, and even more preferably 15 to 25 mPa·s.

Furthermore, in one embodiment of the present invention, the viscosity at 25°C of component (d-2) is preferably 40 to 1000 mPa·s, more preferably 45 to 500 mPa·s, and even more preferably 50 to 300 mPa·s.

Similarly, a chain-like (especially linear) organohydrogenpolysiloxane may be selected as component (d-1), and a resinous organohydrogenpolysiloxane (for example, one having branched siloxane units such as T units and Q units) may be used as component (d-2).

Furthermore, two or more resinous organohydrogenpolysiloxanes with different viscosity and silicon atom-bonded hydrogen atom content may be used in combination as components (d-1) and (d-2).

The content ratio of component (d-1) to component (d-2) may be any value that results in a viscosity within the aforementioned range for the mixture, but specifically, for example, the ratio is 90:10 to 10:90, preferably 80:20 to 20:80, more preferably 60:40 to 40:60, and even more preferably 50:50.

By using a mixture of two or more organohydrogenpolysiloxanes with different viscosity and chemical structure, the curability and adhesion to the substrate can be adjusted.

In one embodiment of the present invention, the amount of component (D) may be such that the molar ratio (SiH/Vi) of silicon atom-bonded hydrogen atoms in component (D) to the alkenyl groups of component (A) is 0.5 to 10.0. The amount of component (D) is such that the molar ratio is preferably 0.7 to 8.0, more preferably 0.8 to 5.0, and even more preferably 0.8 to 3.0.

By adjusting the molar ratio to the aforementioned range, the peeling resistance of the release film formed from the composition according to one embodiment of the present invention can be reduced while maintaining the curability of the composition.

Specific examples of component (D) include, dimethylsiloxane-methylhydrogensiloxane copolymer blocked at both molecular terminals with trimethylsilyl groups, dimethylsiloxane-methylhydrogensiloxane copolymer blocked at both molecular terminals with dimethylhydrogensiloxy groups, dimethylpolysiloxane blocked at both molecular terminals with dimethylhydrogensiloxy groups, methylhydrogenpolysiloxane blocked at both molecular terminals with trimethylsilyl groups, cyclic methylhydrogenpolysiloxane, and cyclic methylhydrogensiloxane-dimethylsiloxane copolymer.

Component (D) preferably contains an organohydrogenpolysiloxane having a viscosity at 25°C within the range described above, and in which both terminals of the molecular chain are blocked with trimethylsilyl groups.

### 1.5 Component (E)

Component (E) is a component for accelerating a hydrosilylation reaction and curing the composition of the present invention. Specific examples of the hydrosilylation reaction catalyst include platinum-based catalysts, rhodiumbased catalysts, and palladium-based catalysts. Of these, platinum-based catalysts are preferred due to being able to significantly accelerate curing.

Specific examples of the platinum-based catalyst include catalyst platinum fine powders, chloroplatinic acids, alcohol solutions of chloroplatinic acid, platinum-alkenylsiloxane complexes, platinum-olefin complexes, platinum-carbonyl complexes, and catalysts in which these platinum-based catalysts are dispersed or encapsulated with a thermoplastic resin such as silicone resin, polycarbonate resin, or acrylic resin.

Of these, platinum-alkenylsiloxane complexes are preferable. The alkenylsiloxane may be: 1,3-divinyl-1,1,3,3-tetramethyldisiloxane; 1,3,5,7-tetramethyl-1,3,5,7-tetravinylcyclotetrasiloxane; an alkenylsiloxane obtained by substituting, with an ethyl group, a phenyl group, or the like, a portion of the methyl groups of the alkenylsiloxanes; an alkenylsiloxane obtained by substituting, with an allyl group, a hexenyl group, or the like, a portion of the vinyl groups of these alkenylsiloxanes; or the like.

The platinum-alkenylsiloxane complex has favorable stability, and therefore, 1,3-divinyl-1,1,3,3-tetramethyldisiloxane is particularly preferable.

Note that examples of the catalyst for accelerating the hydrosilylation reaction also include non-platinum-based metal catalysts such as iron, ruthenium, and iron/cobalt.

Furthermore, the hydrosilylation reaction catalyst may also be a high-energy beam-activated catalyst (also called a photoactivated catalyst) that accelerates the hydrosilylation reaction upon irradiation with ultraviolet rays or other high-energy beams. Examples of high-energy beams include ultraviolet rays, gamma rays, X-rays, alpha rays, electron beams, and the like.

Specific examples of the high-energy beam-activated catalyst include (methylcyclopentadienyl)trimethylplatinum(IV), (cyclopentadienyl)trimethylplatinum(IV), (1,2,3,4,5-pentamethylcyclopentadienyl)trimethylplatinum(IV), (cyclopentadienyl)dimethylethylplatinum(IV), (cyclopentadienyl)dimethylacetylplatinum(IV), (trimethylsilylcyclopentadienyl)trimethylplatinum(IV), (methoxycarbonylcyclopentadienyl)trimethylplatinum(IV), (dimethylphenylsilylcyclopentadienyl)trimethylcyclopentadienylplatinum(IV), trimethyl(acetylacetonato)platinum(IV), trimethyl(3,5-heptanedionato)platinum(IV), trimethyl(methylacetoacetate)platinum(IV), bis(2,4-pentanedionato)platinum(II), bis(2,4-hexanedionato)platinum(II), bis(2,4-heptanedionato)platinum(II), bis(3,5-heptanedionato)platinum(II), bis(1-phenyl-1,3-butanedionato)platinum(II), bis(1,3-diphenyl-1,3-propanedionato)platinum(II), and bis(hexafluoroacetylacetonato)platinum(II).

Component (E) may be one of the aforementioned components used alone, or two or more may be used in combination.

In one embodiment of the present invention, the amount of component (E) is such that the amount of metal atoms is preferably in a range of 1.0 to 1000 ppm by mass, more preferably 10 to 500 ppm by mass, and even more preferably 100 to 300 ppm by mass, relative to the total amount of components (A), (B), (C), and (D).

### 1.6 Component (F):

Component (F) is an organic solvent that may be optionally used to uniformly compatibilize the chain-like organopolysiloxane of component (A) and to compatibilize the entire composition. Here, "compatibilizing" means that turbidity is not observed in the appearance at 25°C and a uniform and transparent liquid is provided. The viscosity of the composition according to one embodiment of the present invention can be reduced by adding an organic solvent, thereby improving the applicability and wettability to the substrate.

Examples of component (F) include: hydrocarbon-based solvents such as aromatic hydrocarbon-based solvents such as toluene and xylene, aliphatic hydrocarbon-based solvents such as hexane, heptane, octane, isooctane, decane, cyclohexane, methylcyclohexane, and isoparaffin, industrial gasoline (rubber solvents or the like), petroleum benzene, and solvent naphtha; ketone-based solvents such as acetone, methyl ethyl ketone, 2-pentanone, 3-pentanone, 2-hexanone, 2-heptanone, 4-heptanone, methyl isobutyl ketone, diisobutyl ketone, acetonyl acetone, and cyclohexanone; ester-based solvents such as ethyl acetate, propyl acetate, isopropyl acetate, butyl acetate, and isobutyl acetate; solvents having ester and ether components such as 2-methoxyethylacetate, 2-ethoxyethylacetate, propylene glycol monoether acetate, and 2-butoxyethylacetate; and siloxanebased solvents such as hexamethyl disiloxane, octamethyl trisiloxane, octamethyl cyclotetrasiloxane, decamethyl cyclopentasiloxane, tris(trimethylsilyl)methylsilane, and tetrakis(trimethylsilyl)silane. Furthermore, component (F) can be diethyl ether, dipropyl ether, diisoprpyl ether, dibutyl ether, diisobutyl ether, di-sec-butyl ether, di-tert-butyl ether, methyl-tert-butyl ether, ethyl-tert-butyl ether, pentane, or the like.

Component (F) may be one of the aforementioned components used alone, or two or more may be used in combination.

In one embodiment of the present invention, the amount of component (F) is not particularly limited and should be an amount that allows for uniform compatibility with component (A) and the entire composition. For example, the amount is 10000 parts by mass or less per 100 parts by mass of component (A), and preferably in a range of 20 to 5000 parts by mass.

### 1.7 Component (G):

Component (G) is a hydrosilylation reaction control agent that may be optionally used to control the crosslinking reaction of a composition according to one embodiment of the present invention.

Specific examples of component (G) include: alkyne alcohols such as 1-ethynylcyclohexan-1-ol, 3-methyl-1-butyn-3-ol, 2-methyl-3-butyn-2-ol, 3,5-dimethyl-1-hexyn-3-ol, and 2-phenyl-3-butyn-2-ol; enyne compounds such as 3-methyl-3-penten-1-yne and 3,5-dimethyl-3-hexen-1-yne; methyl alkenyl siloxane oligomers such as 1,3,5,7-tetramethyl-1,3,5,7-tetravinylcyclotetrasiloxane and 1,3,5,7-tetramethyl-1,3,5,7-tetrahexenylcyclotetrasiloxane; alkynoxysilanes such as dimethyl bis(3-methyl-1-butyn-3-oxy)silane and methylvinyl bis(3-methyl-1-butyn-3-oxy)silane; and alkyneoxysilane compounds such as methyltris(1-methyl-1-phenyl-propyneoxy)silane, dimethylbis(1-methyl-1-phenyl-propyneoxy)silane, methyltris(1,1-dimethyl-propyneoxy)silane, and dimethylbis(1,1-dimethylpropyneoxy)silane; as well as benzotriazole; diallyl maleate, diallyl fumarate, and (tris((1,1-dimethyl-2-propynyl)oxy)methylsilane.

Component (G) may be one of the aforementioned components used alone, or two or more may be used in combination.

In one embodiment of the present invention, the amount of component (G) is not particularly limited and should be an amount that provides a sufficient pot life to the composition of one embodiment of the present invention. For example, the amount is preferably in a range of 0.01 to 5 parts by mass, 0.05 to 5 parts by mass, or 0.05 to 3 parts by mass, per 100 parts by mass of component (A).

### 1.8 Optional Components

The composition according to one embodiment of the present invention may further contain, as necessary, other components in addition to components (A) to (E) and optionally selected components (F) to (G). Examples of such optional components include photopolymerization initiators, antioxidants, reactive diluents, leveling agents, fillers, antistatic agents, defoamers, and pigments.

Of the above, the type of antistatic agent is not particularly limited, and any antistatic agent such as conductive fine particles like carbon black, ionic conductive antistatic agents described in JP 2009-030028 A, lithium salts described in JP 2012-157978 A, cationic activators, anionic activators, and nonionic activators can be used without particular restriction. Note that an antistatic agent is preferably incorporated in applications for protective films for electronic devices such as displays and the like, for example.

### 1.9 Method for producing the composition of the present invention

The compositions of the present invention can be produced by uniformly mixing components (A) to (E), optional components (F) to (G), and other optional components. The order in which each component is added is not particularly limited.

In one embodiment, if the resulting composition is not to be used immediately after mixing the components, the mixture of components (A) to (D) and component (E) may be stored separately and mixed immediately prior to use. Furthermore, in a composition containing components (A) to (E), an optional component (F), and other components, the type and amount of the hydrosilylation reaction inhibitor in component (G) can be adjusted to create a composition that does not crosslink at room temperature but crosslinks and hardens when heated.

### 1.10 Method for curing composition of the present invention

The composition of the present invention can be cured by known methods. For example, a release layer (peelable cured layer) containing a cured silicone film (cured organopolysiloxane film) can be formed on the surface of the substrate by uniformly coating a composition according to one embodiment of the present invention onto a sheet-like or film-like substrate, and then heating, irradiating with a high-energy beam (for example, ultraviolet rays, electron beams, and the like), or a combination thereof under conditions sufficient to cause crosslinking of components (A) to (D) by hydrosilylation.

### 2. Other configurations of laminate body

The laminate body of the present invention contains an organopolysiloxane as an adhesive layer. The organopolysiloxane is not limited to any specific type, and any suitable organopolysiloxane can be used for the intended application of the laminate body (for example, adhesive tape).

The curing mechanism of the silicone adhesive is not particularly limited, and hydrosilylated, peroxide-curable, and photocurable types are used. A commercially available composition may be used as the silicone pressure-sensitive adhesive composition. For example, hydrosilylated and curable silicone adhesives such as SD 4580 PSA, SD 4584 PSA, SD 4585 PSA, and SH 4280 PSA, manufactured by Dow Toray Industries, Ltd., can be used. Furthermore, in assembly applications, particularly OCA applications, high adhesive strength and high flexibility are sometimes required over a wider temperature range, including low temperatures. Therefore, the composition can be designed so that the glass transition temperature of the cured adhesive composition is low, for example at or below room temperature, and a silicone adhesive that suppresses the storage modulus at low temperature and that has a sufficiently large elongation at break is preferably used. Examples thereof include silicone adhesive compositions proposed by the present applicant in WO 2017/188308, etc.

In the laminate body according to one embodiment of the present invention, the thickness of the adhesive layer is not particularly limited, but is preferably 0.1 to 300 µm, and more preferably 0.5 to 200 µm.

Furthermore, the thickness of the release layer is not particularly limited, but is preferably 2.0 µm or less, 1.0 µm or less, 0.5 µm or less, 0.4 µm or less, or 0.3 µm or less. Furthermore, the thickness of the release layer is preferably 0.01 µm or more, 0.05 µm or more, or 0.1 µm or more.

When the thickness of the release layer is within the aforementioned range, the peeling resistance of the release layer from the silicone adhesive can be reduced.

The laminate body of the present invention is a laminate body having a structure in which an adhesive layer (silicone adhesive layer) containing an organopolysiloxane is provided opposite at least one release layer. "Opposite" means that the release layer and the adhesive layer are in direct contact. The structure of the laminate body of the present invention is not particularly limited so long as being a structure in which an adhesive layer and a release layer are provided opposite each other.

Specific examples of the laminate body are described below.

The laminate body according to one embodiment of the present invention may be, for example, any of the following (a) to (d).
(a) A laminate body containing a first substrate/release layer/silicone adhesive layer/second substrate;
(b) a laminate body formed by continuously laminating two or more constituting units containing a substrate/release layer/silicone adhesive layer;
(c) a laminate body containing a first substrate/first release layer/silicone adhesive layer/second release layer/second substrate; and
(d) a laminate body formed by continuously laminating two or more constituting units containing a substrate/first release layer/silicone adhesive layer/second release layer.

Note that in (b) and (d) above, the substrate can be discontinuous or continuous. Generally, when discontinuous materials are used, the laminate body will be in the form of a sheet or film, but when continuous materials are used, the laminate body will be in the form of a roll. Furthermore, there are no particular restrictions on the material of the substrate, and any known material can be selected and used. Examples of plastics include polyesters such as polyethylene terephthalate and polyethylene naphthalate; polyolefins such as polypropylene and polymethylpentene; polycarbonate; and polyvinyl acetate.

The substrate may be a single layer or a laminate with two or more layers made of the same or different types of plastic.

The thickness of the substrate is generally 10 to 300 µm, preferably 15 to 200 µm, and more preferably 20 to 125 µm.

The laminate body according to one embodiment of the present invention may be a sheet-like or film-like laminate body in which a plurality of sheet-like or film-like members are stacked vertically, or the laminate body may be a roll-like laminate body wound around, for example, a cylindrical or tubular core.

Furthermore, in a laminate body according to one embodiment of the present invention, the silicone adhesive layer may be formed on the entire surface constituting the layer, or may be formed only on a portion of that surface. The embodiment in which the silicone adhesive layer is formed on only a portion of the surface is not particularly limited, but may be applied to form any shape, such as one or a plurality of dots, one or a plurality of straight lines, curves, or concentric circles.

Similarly, the release layer may be formed on the entire surface configuring the release layer, but the release layer may also be formed in accordance with the shape of the silicone adhesive formed on the silicone adhesive layer.

The method for manufacturing the laminate body of the present invention is not particularly limited, and the laminate body according to one embodiment of the present invention described above can be manufactured by known methods. The method of manufacturing the laminate body can be referenced, for example, in Patent Document 4 and the WO 2020/138413 referenced in Patent Document 4.

### 3. Article

As one aspect, the present invention provides an article containing a laminate body according to one embodiment of the present invention (hereinafter referred to as "the article of the present invention"). The aforementioned laminate body is as described in section "2. Laminate body" above.

The article according to one embodiment of the present invention may have a sheet-like, roll-like, or film-like shape.

Articles according to one embodiment of the present invention are not particularly limited and include, for example: optical components such as liquid crystal panels, plasma displays, polarizing plates, and phase difference plates; and electrical and electronic components, such as printed circuit boards, ICs, transistors, and capacitors.

### EXAMPLES

The present invention is further described below on the basis of Examples, but the present invention is not limited to the Examples below.

### Examples 1 to 13 and Comparative Examples 1 to 5

The following components (A) to (F) were uniformly mixed to obtain curable organopolysiloxane compositions corresponding to Examples 1 to 13 and Comparative Examples 1 to 5. Furthermore, each composition was mixed with a toluene/heptane mixed solution (toluene:heptane = 50:50) and diluted so that the total amount of components (A) to (D) was 5.3 mass% of the composition. Then, a chlorplatinic acid/1,3-divinyl-1,1,3,3-tetramethyldisiloxane complex was added as component (G) in an amount such that the amount of platinum metal was 260 ppm relative to the total amount of components (A) to (D), and thus a diluted solution of the curable organopolysiloxane composition was prepared. Subsequently, release sheets made from each composition were prepared using the method described below, for use in the peeling resistance evaluation and residual adhesive strength tests described below. Note that the amount (parts by mass) of components (A) to (C) is shown in Tables 1 to 3.

### Component (A)

- Component (A1): A gum-like polydimethylsiloxane with both terminals of the molecular chain blocked with hydroxyl groups and having vinyl groups in side chains (plasticity at 25°C = 1.50, vinyl group content = 0.85 mass%)
- Component (A2): A gum-like polydimethylsiloxane with both terminals of the molecular chain blocked with trimethylsilyl groups and having hexenyl groups in side chains (plasticity at 25°C = 1.20, vinyl group content = 0.77 mass%)
- Component (A3): A gum-like polydimethylsiloxane with both terminals of the molecular chain blocked with trimethylsilyl groups and having hexenyl groups in side chains (plasticity at 25°C = 1.20, vinyl group content = 0.25 mass%)

### Component (B)

- Component (B1): A gum-like organopolysiloxane with both terminals of the molecular chain blocked with hydroxyl groups and having alkenyl groups in the side chains (plasticity at 25°C = 1.60).
- Component (B2): A gum-like organopolysiloxane with both terminals of the molecular chain blocked with trimethylsilyl groups and having alkenyl groups in the side chains (plasticity at 25°C = 1.70).
- Component (B3): A liquid organopolysiloxane with both terminals of the molecular chain blocked with trimethylsilyl groups and not having alkenyl groups in the side chains (viscosity at 25°C = 4,000,000 mPa·s)
- Component (B4): A liquid organopolysiloxane with both terminals of the molecular chain blocked with trimethylsilyl groups and not having alkenyl groups in the side chains (viscosity at 25°C = 100,000 mPa·s)
- Component (B5): A gum-like organopolysiloxane with vinyl groups at the terminals of the molecular chain (plasticity at 25°C = 1.40; vinyl group content = 0.02 mass%)

### Component (C)

- Component (C1): A liquid organopolysiloxane with both terminals of the molecular chain blocked with trimethylsilyl groups and having phenyl groups in the side chains (viscosity at 25°C = 50000 mPa·s)
- Component (C2): A liquid organopolysiloxane with both terminals of the molecular chain blocked with hydroxyl groups and having methyl groups in the side chains (viscosity at 25°C = 14000 mPa·s)
- Component (C3): A liquid organopolysiloxane with both terminals of the molecular chain blocked with trimethylsilyl groups and having methyl groups in the side chains (viscosity at 25°C = 5000 mPa·s)
- Component (C4): A liquid organopolysiloxane with both terminals of the molecular chain blocked with trimethylsilyl groups and having phenyl groups in the side chains (viscosity at 25°C = 500 mPa·s)

### Component (D)

A mixture of the following components (D1) and (D2) in a mass ratio of 50:50 (amount such that the SiH/Vi ratio in the composition is 1.3).
- Component (D1): Methylhydrogenpolysiloxane with both terminals of the molecular chain blocked with trimethylsilyl groups (viscosity at 25°C = 25 mPa·s)
- Component (D2): Dimethylmethylhydrogenpolysiloxane with both terminals of the molecular chain blocked with trimethylsilyl groups (viscosity at 25°C = 55 mPa·s)

### Component (E)

Toluene in an amount such that the total amount of components (A) to (C) is 30 mass% of the composition.

### Component (F)

1.5 parts by mass of 3-methyl-1-butyn-3-ol per 100 parts by mass of component (A).

### Preparation of release sheets

Diluted solutions of each prepared curable organopolysiloxane composition were coated onto the surface of a biaxially oriented polyester film (manufactured by Toray Industries, Inc., 50 µm thick) using OSP A-bar, in an amount equivalent to 0.50 g/m² based on solid content excluding solvent. After coating, the substrate coated with each composition was heated for 60 seconds in a hot air circulating oven set to a temperature of 130°C to form a cured layer of organopolysiloxane on the surface of the polyester film substrate. Subsequently, the release sheet was prepared by storing for 24 hours in a hot air circulating oven set to a temperature of 70°C.

### Evaluation of peeling resistance

Silicone adhesive tape MY2G (manufactured by SYMBIO INC., (Taiwan)) was applied onto the prepared release sheet by reciprocating a 2 kg roller back and forth two times. Furthermore, a laminate body sheet was fabricated by storing for 24 hours in a hot air circulating oven set to a temperature of 70°C under pressure of 20 gf/cm². Subsequently, the resistance value (peeling resistance) was measured using a Tensilon testing machine when tape was peeled off of the laminate body sheet at an angle of 180 degrees and a speed of 0.3 m/min. Note that units of gf/25 mm can be converted to N/25 mm. The results are shown in Tables 1 to 3. In the peeling resistance evaluation, samples with a resistance value exceeding 500 gf/25 mm were immediately deemed unacceptable, and the residual adhesive strength evaluation described below was not performed.

### Evaluation of residual adhesive strength

In the peeling resistance evaluation, the peeled-off tape was reattached to a BA plate (SUS plate) by reciprocating a 2 kg roller two times, and then stored at room temperature for 1 hour or 24 hours. Subsequently, the resistance value (residual adhesive strength) was measured using a Tensilon testing machine when tape was peeled off of the laminate body sheet at an angle of 180 degrees and a speed of 0.3 m/min. The results are shown in Tables 1 to 3. Results with a resistance value of 600 gf/25 mm or higher within 24 hours were deemed to be acceptable.

**[Table 1]**

| | | Molecular chain terminal | Side chain | Viscosity mPa·s (plasticity) | Vinyl group (mass%) | Example 1 | Example 2 | Example 3 | Example 4 | Example 5 | Example 6 | Example 7 |
|---|---|---|---|---|---|---|---|---|---|---|---|---|
| Component (A) | (A1) | Hydroxyl group | Methyl group, vinyl group | Gum-like (1.50) | 0.85 | 100 | | | 100 | 100 | | 100 |
| | (A2) | Trimethylsilyl group | Methyl group, hexenyl group | Gum-like (1.20) | 0.77 | | 100 | | | | | |
| | (A3) | Trimethylsilyl group | Methyl group, hexenyl group | Gum-like (1.20) | 0.25 | | | 100 | | | 100 | |
| Component (B) | (B1) | Hydroxyl group | Methyl group | Gum-like (1.60) | - | 31.3 | 31.3 | 31.3 | 10.1 | 48.5 | 48.5 | |
| | (B2) | Trimethylsilyl group | Methyl group | Gum-like (1.70) | - | | | | | | | 15.6 |
| | (B3) | Trimethylsilyl group | Methyl group | 4000000 | - | | | | | | | |
| | (B4) | Trimethylsilyl group | Methyl group | 100000 | - | | | | | | | |
| | (B5) | Vinyl group | Methyl group | Gum-like (1.40) | 0.02 | | | | | | | |
| Component (C) | (C1) | Trimethylsilyl group | Methyl group, phenyl group | 50000 | - | 1.3 | 1.3 | 1.3 | 1.2 | 1.6 | 1.3 | 1.3 |
| | (C2) | Hydroxyl group | Methyl group | 14000 | - | | | | | | | |
| | (C3) | Trimethylsilyl group | Methyl group | 5000 | - | | | | | | | |
| | (C4) | Trimethylsilyl group | Methyl group, phenyl group | 500 | - | | | | | | | |
| Peeling resistance (gf/25 mm) | | | | | | 13 | 9 | 15 | 75 | 6 | 6 | 250 |
| Residual adhesive strength (room temperature, 1 hour) | | | | | | 960 | 550 | 500 | - | 540 | 30 | 380 |
| Residual adhesive strength (room temperature, 24 hours) | | | | | | 970 | 980 | 1120 | 1170 | 1130 | 1100 | 970 |

**[Table 2]**

| | | Molecular chain terminal | Side chain | Viscosity mPa·s (plasticity) | Vinyl group (mass%) | Example 7 | Example 8 | Example 9 | Example 10 | Example 11 | Example 12 | Example 13 |
|---|---|---|---|---|---|---|---|---|---|---|---|---|
| Component (A) | (A1) | Hydroxyl group | Methyl group, vinyl group | Gum-like (1.50) | 0.85 | 100 | 100 | 100 | 100 | 100 | 100 | 100 |
| | (A2) | Trimethylsilyl group | Methyl group, hexenyl group | Gum-like (1.20) | 0.77 | | | | | | | |
| | (A3) | Trimethylsilyl group | Methyl group, hexenyl group | Gum-like (1.20) | 0.25 | | | | | | | |
| Component (B) | (B1) | Hydroxyl group | Methyl group | Gum-like (1.60) | - | | | 31.3 | 31.3 | 31.3 | 20 | 50 |
| | (B2) | Trimethylsilyl group | Methyl group | Gum-like (1.70) | - | 15.6 | | | | | | |
| | (B3) | Trimethylsilyl group | Methyl group | 4000000 | - | | 31.3 | | | | | |
| | (B4) | Trimethylsilyl group | Methyl group | 100000 | - | | | | | | | |
| | (B5) | Vinyl group | Methyl group | Gum-like (1.40) | 0.02 | | | | | | | |
| Component (C) | (C1) | Trimethylsilyl group | Methyl group, phenyl group | 50000 | - | 1.3 | 1.3 | | | | | |
| | (C2) | Hydroxyl group | Methyl group | 14000 | - | | | 1.3 | | | | |
| | (C3) | Trimethylsilyl group | Methyl group | 5000 | - | | | | 1.3 | | | |
| | (C4) | Trimethylsilyl group | Methyl group, | 500 | - | | | | | 1.3 | | |
| | | | phenyl group | | | | | | | | | |
| Peeling resistance (af/25 mm) | | | | | | 250 | 104 | 18 | 22 | 11 | 19 | 4 |
| Residual adhesive strenath (room temperature, 1 hour) | | | | | | 380 | 90 | 870 | 830 | 800 | 720 | 680 |
| Residual adhesive strength (room temperature, 24 hours) | | | | | | 970 | 700 | 910 | 930 | 900 | 840 | 840 |

**[Table 3]**

| | | Molecular chain terminal | Side chain | Viscosity mPa·s (plasticity) | Vinyl group (mass%) | Comparative Example 1 | Comparative example 2 | Comparative Example 3 | Comparative example 4 | Comparative Example 5 |
|---|---|---|---|---|---|---|---|---|---|---|
| Component (A) | (A1) | Hydroxyl group | Methyl group, vinyl proup | Gum-like (1.50) | 0.85 | 100 | 100 | 100 | | |
| | (A2) | Trimethylsilyl group | Methyl group, hexenyl group | Gum-like (1.20) | 0.77 | | | | 100 | |
| | (A3) | Trimethylsilyl group | Methyl group, hexenyl group | Gum-like (1.20) | 0.25 | | | | | 100 |
| Component (B) | (B1) | Hydroxyl group | Methyl group | Gum-like (1.60) | - | | | | | 100 |
| | (B2) | Trimethylsilyl group | Methyl group | Gum-like (1.70) | - | | | | | |
| | (B3) | Trimethylsilyl group | Methyl group | 4000000 | - | | | | | |
| | (B4) | Trimethylsilyl group | Methyl group | 100000 | - | | 31.3 | | | |
| | (B5) | Vinyl group | Methyl group | Gum-like (1.40) | 0.02 | | | 100 | 100 | |
| Component (C) | (C1) | Trimethylsilyl group | Methyl group, phenyl group | 50000 | - | 1.01 | 1.3 | | | 1.3 |
| | (C2) | Hydroxyl group | Methyl group | 14000 | - | | | | | |
| | (C3) | Trimethylsilyl group | Methyl group | 5000 | - | | | | | |
| | (C4) | Trimethylsilyl group | Methyl group, phenyl group | 500 | - | | | | | |
| Peeling resistance (gf/25 mm) | | | | | | 760 | 1100 | 600 | 600 | -* |
| Residual adhesive strength (room temperature, 1 hour) | | | | | | - | 660 | - | 900 | - |
| Residual adhesive strength (room temperature, 24 hours) | | | | | | - | - | - | - | - |

| | | | | | | | | | | |
|---|---|---|---|---|---|---|---|---|---|---|
| *Measurement is not possible because the composition is not yet cured. | | | | | | | | | | |

As shown in Tables 1 and 2, the release sheets made from each of the compositions in Examples 1 to 13 were sheets with low peeling resistance and could be peeled off with low peeling force. Furthermore, the release sheets made from each of the compositions in Examples 1 to 13 exhibited stable peeling behavior. Furthermore, the release sheets made from each of the compositions in Examples 1 to 13 exhibited favorable residual adhesive strength. Note that in Examples 6 and 8, the residual adhesive strength after 1 hour was low, and the residual adhesive strength after 24 hours was favorable, resulting in a perfectly usable outcome.

On the other hand, as shown in Table 3, the release sheet made from the composition of Comparative Example 1, which did not contain component (B), had high peeling resistance and was not practical. Similarly, the release sheets made from the compositions of Comparative Example 2, which contained a component (B4) with a viscosity at 25°C of less than 500,000 mPa·s, and Comparative Examples 3 and 4, which contained a component (B5) having an alkenyl group in the molecule, also exhibited high peeling resistance and poor practicality. Furthermore, in Comparative Example 5, the composition in which the amount of component (B1) exceeded 80 parts by mass per 100 parts by mass of component (A) did not yield a favorable cured film in the first place.

## Claims

1. A laminate body having a structure in which an adhesive layer containing an organopolysiloxane is provided opposite to at least one release layer, the release layer having a cured product made by curing a curable organopolysiloxane composition, the composition comprising:
(A) 100 parts by mass of a chain-like organopolysiloxane having an alkenyl group with 2 to 12 carbon atoms, having a viscosity of 1,000,000 mPa·s or more at 25°C, or having plasticity at 25°C;
(B) 5 to 80 parts by mass of a linear organopolysiloxane that does not contain an alkenyl group and has a viscosity at 25°C of 500,000 mPa·s or more, or has plasticity at 25°C;
(C) 0 to 20 parts by mass of a linear organopolysiloxane without an alkenyl group, having a viscosity at 25°C of less than 500,000 mPa·s;
(D) an organohydrogenpolysiloxane having two or more silicon atom-bonded hydrogen atoms (Si-H) in each molecule; and
(E) a hydrosilylation reaction catalyst.

2. The laminate body according to claim 1, wherein component (B) contains a chain-like organopolysiloxane in which both terminals of the molecular chain are blocked with hydroxyl groups.

3. The laminate body according to claim 1, wherein component (B) contains a chain-like organopolysiloxane in which both terminals of the molecular chain are blocked with trialkylsilyl groups.

4. The laminate body according to claim 1, wherein component (C) contains a chain-like organopolysiloxane in which both terminals of the molecular chain are blocked with trialkylsilyl groups or hydroxyl groups.

5. The laminate body according to claim 1, wherein component (C) contains a chain-like organopolysiloxane having in a side chain at least one group selected from the group consisting of alkyl groups and aryl groups having 1 to 12 carbon atoms.

6. The laminate body according to claim 1, wherein component (C) contains a chain-like organopolysiloxane having in a side chain at least one group selected from the group consisting of methyl groups and phenyl groups.

7. The laminate body according to claim 1, wherein component (D) contains an organohydrogenpolysiloxane having a viscosity at 25°C of 1 to 1000 mPa·s, and both terminals of the molecular chain are blocked with trimethylsilyl groups.

8. The laminate body according to claim 1, wherein the amount of component (D) is such that the molar ratio of silicon atom-bonded hydrogen atoms in component (D) to alkenyl groups in component (A) is 0.5 to 10.0.

9. The laminate body according to claim 1, wherein
Component (A) contains a chain-like organopolysiloxane having in a side chain an alkenyl group with 2 to 12 carbon atoms;
Component (B) contains a chain-like organopolysiloxane in which both terminals of the molecular chain are blocked with hydroxyl groups, or both terminals of the molecular chain are blocked with trimethylsilyl groups; and
Component (C) contains a chain-like organopolysiloxane in which both terminals of the molecular chain are blocked with trimethylsilyl groups or hydroxyl groups.

10. The laminate body according to claim 1, not containing a fluorine-containing compound.

11. The laminate body according to claim 1, having a sheet-like, roll-like, or film-like shape.

12. An article, comprising: a laminate body according to any one of claims 1 to 11.
